# EUROPEAN PATENT APPLICATION

(11) **EP 2 236 350 A2**
(43) Date of publication of application: **06.10.2010**
(21) Application number: 10150081.7
(22) Date of filing: 05.01.2010
(51) Int. Cl.: B60N 2/28

(54) **Tightening device for the seat belt of an infant seat for automobiles**

(30) Priority: 15.01.2009 ES 200900139
(71) Applicant: Play, S.A., 08184 Palau-Solità I Plegamans (ES)
(72) Inventor: Jane Stopp, Joaquin, 08184, Palau de Plegamans (ES)
(74) Representative: Ponti Sales, Adelaida

(57) **Abstract**

The tightening device of a seat belt of an infant seat for automobiles is **characterised in that** it comprises a driving element (1) rotatably integral with a rod (2), around which the seat belt is wound, tightening it. Said driving element (1) comprises preferably an axis (3) provided with a first gear (4) at one of its ends, said first gear (4) engaging with a second gear (5) provided at one of the ends of said rod (2).

Thanks to the tightening device of the present invention, the tightening of the seat belt is more comfortable that currently, because the adult that places the seat belt simply drives the driving element until the seat belt is enough tightened.

## Description

The present invention refers to a tightening device for the seat belt of an infant seat for automobiles, which permits to tighten easily the seat belt of the infant seat itself.

### BACKGROUND OF THE INVENTION

Now it is compulsory the use of security infant seats in automobiles if kids, with a weight and age lower than those according to regulations, travel in the automobile.

One kind of these seats is fixed to the automobile seat by the seat belt of the automobile or by the system known as Isofix. These seats comprise an own and independent from seat belt of the automobile.

It is necessary to tighten properly this seat belt to work correctly.

There are known tightening mechanisms for the seat belt, which present the drawback that they are uncomfortable to use, so that in use they are tightened very few times, and not each time the seat is used, as is suitable. This lack of tightening each time the seat is used involves, firstly, the possibility of an unsuitable tightening and, secondly, the removal of the seat belt is more uncomfortable.

E.g. Spanish patent application P9601622, of the same applicant that the present application, describes a tightening mechanism of the seat belt that comprises a push-button that permits to pull the seat belt manually to tighten it. In this example, the push-button is placed at the lower part of seat belt, particularly in the part that is placed between the legs of the child when he/she is seated in the seat.

### SUMMARY OF THE INVENTION

With the tightening device of the invention said drawbacks can be solved, presenting other advantages that will be described.

The tightening device of the seat belt of an infant seat for automobiles of the present invention is **characterised in that** it comprises a driving element rotatably integral with a rod, around which the seat belt is wound, tightening it.

Thanks to this feature, the tightening of the seat belt is more comfortable that currently, because the adult that places the seat belt simply drives the driving element until the seat belt is enough tightened.

According to a preferred embodiment, said driving element comprises an axis provided with a first gear at one of its ends, said first gear engaging in a second gear provided at one of the ends of said rod, said first and second gears being advantageously conical.

Said first gear is associated with a spring that presses said first gear against said second gear.

The tightening device of the present invention also comprises advantageously a locking element that prevents the rotation of the driving element and of the rod, in a rotation direction.

Preferably, said locking element is a ratchet that engages with a saw teeth wheel integral with said rod and said locking element is integral with a releasing element.

According to a preferred embodiment, said driving element is a rotatable knob and said releasing element is a ring placed around said rotatable knob.

### BRIEF DESCRIPTION OF THE DRAWINGS

For a better understanding of what has been described, some drawings are attached in which, diagrammatically and only as a non-limitative example, a practical case of embodiment is shown.
Fig. 1 is a frontal perspective view of an infant seat of the present invention;
Fig. 2 is a perspective view of the detail of the driving knob of Fig. 1;
Fig. 3 is a rear perspective view of the infant seat of the present invention; and
Fig. 4 is a perspective view of the detail of the gear mechanism of Fig. 3.

### DESCRIPTION OF A PREFERRED EMBODIMENT

As it can be seen in the figures, the tightening device of the present invention is provided in an infant seat for automobiles, identified generally with numeral reference 10, to tighten the seat beat (not shown) of the infant seat 10 itself.

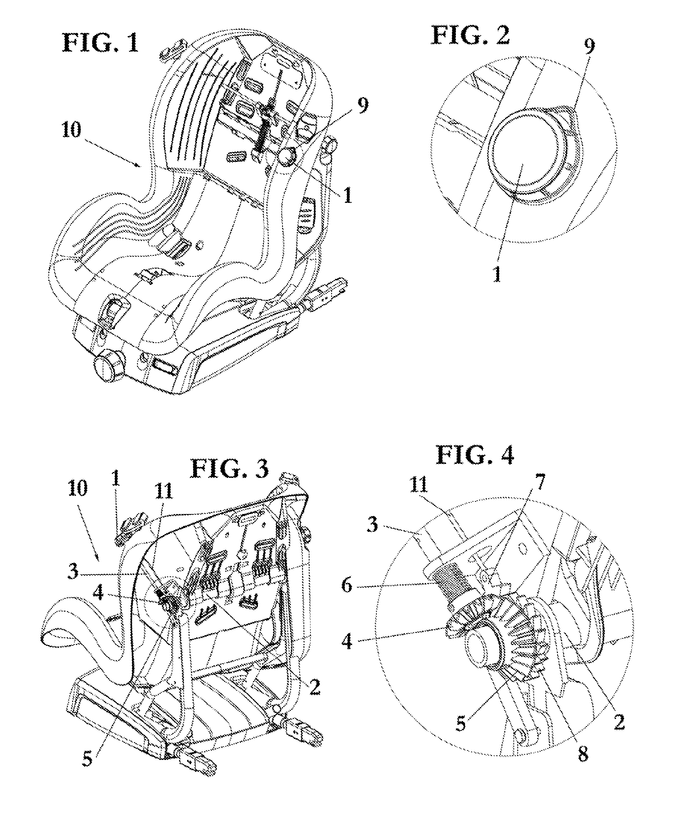

Said tightening device comprises a driving element 1, which in the case of the embodiment shown is a rotatable knob, placed in an easily accessible zone of the infant seat 10, e.g. in a side of the seat, as it can be seen in Fig. 1.

Said rotatable knob 1 comprises an axis 3 provided at its lower end with a first gear 4. Said first gear 4 engages with a second gear 5, which is integral with a rod 2, around which the seat belt of the infant seat 10 is wound. It must be pointed out that in the embodiment shown the gears 4, 5 are conical gears, even though they could be any means to transmit the rotation movement.

To assure that the gears 4, 5 are always engaged to each other, said first gear 4 comprises an associated spring 6, that presses said first gear 4 against said second gear 5.

To prevent the releasing of the seat belt involuntarily, e.g. in the case of an accident, the tightening device of the present invention comprises a locking element 7, a ratchet in the case of the embodiment shown, that engages with a saw teeth wheel 8 integral with the rod 2. Therefore, the saw teeth wheel 8 permits the rotation of the rod 2 in a rotation direction, but prevents its rotation in the opposite direction.

To release the locking element 7, the device of the present invention comprises a releasing element 9, which in the case of the embodiment shown in a ring placed around the rotatable knob 1. Between the ring 9 and the locking element 7 there is an axis 11, which transmits the movement of the ring 9 to move the locking element 7 and to release the rotation of the rod 2 in both directions.

To make the movement of the ring 9 easier, it comprises a protrusion 9a, as it can be better seen in Fig. 2.

When the infant seat 10 is used, once the child is seated, the seat belt is placed as usually, and then the rotatable knob 1 is rotated until the suitable tightening of the seat belt is obtained, so that the child is subjected but the seat belt does not presses him/her in excess. If the seat belt is tightened in excess, the ring 9 must be pressed, which permits to release the seat belt.

When it is no longer necessary to use the seat, before the child leaves the seat, the seat belt can be released to make the leaving of the child from the seat easier, as described previously.

Even though reference is made to a specific embodiment of the invention, it is apparent for a person skilled in the art that the described tightening device is susceptible of numerous variations and modifications, and that all the details cited can be substituted by other technically ones, without departing from the protection scope defined by the attached claims.

## Claims

1. Tightening device of a seat belt of an infant seat for automobiles, **characterised in that** it comprises a driving element (1) rotatably integral with a rod (2), around which the seat belt is wound, tightening it.

2. Tightening device according to claim 1, wherein said driving element (1) comprises an axis (3) provided with a first gear (4) at one of its ends, said first gear (4) engaging with a second gear (5) provided at one of the ends of said rod (2).

3. Tightening device according to claim 2, wherein said first (4) and second (5) gears are conical gears.

4. Tightening device according to claim 1 or 2, wherein said first gear (4) is associated with a spring (6) that presses said first gear (4) against said second gear (5).

5. Tightening device according to claim 1, which also comprises a locking element (7), which prevents the rotation of the driving element (1) and of the rod (2), in a rotation direction.

6. Tightening device according to claim 5, wherein said locking element is a ratchet (7) that engages with a saw teeth wheel (8) integral with said rod (2).

7. Tightening device according to claim 5 or 6, wherein said locking element (7) is integral with a releasing element (9).

8. Tightening device according to claim 1, wherein said driving element is a rotatable knob (1).

9. Tightening device according to claims 7 and 8, wherein said releasing element is a ring (9) placed around said rotatable knob (1).
